# EUROPÄISCHE PATENTSCHRIFT

(11) **EP 2 564 174 B1**
(45) Veröffentlichungstag und Bekanntmachung des Hinweises auf die Patenterteilung: **11.05.2016**
(21) Anmeldenummer: 11710195.6
(22) Anmeldetag: 24.03.2011
(51) Int. Cl.: G01F 23/296, G01N 11/16

(54) **VORRICHTUNG ZUR BESTIMMUNG UND/ODER ÜBERWACHUNG EINER PROZESSGRÖßE EINES MEDIUMS**
DEVICE FOR DETERMINING AND/OR MONITORING A PHYSICAL PROCESS VARIABLE OF A MEDIUM
DISPOSITIF PERMETTANT DE DETERMINER ET/OU SURVEILLER UNE GRANDEUR PHYSIQUE RELATIVE A UN MILIEU

(30) Priorität: 28.04.2010 DE 102010028303
(43) Veröffentlichungstag der Anmeldung: 06.03.2013
(73) Patentinhaber: Endress+Hauser GmbH+Co. KG, 79689 Maulburg (DE)
(72) Erfinder: URBAN, Martin, 79541 Lörrach (DE); BRENGARTNER, Tobias, 79111 Freiburg (DE)
(74) Vertreter: Andres, Angelika Maria
(86) Internationale Anmeldenummer: PCT/EP2011/054522
(87) Internationale Veröffentlichungsnummer: WO 2011/134723

(56) Entgegenhaltungen:
- EP-A2- 1 333 256
- DE-A1- 10 050 299
- DE-A1- 19 634 663
- US-A- 5 533 381
- US-B1- 6 301 973

## Beschreibung

Die Erfindung bezieht sich auf eine Vorrichtung zur Bestimmung und/oder Überwachung mindestens einer Prozessgröße, insb. eines Füllstands, einer Dichte oder einer Viskosität, eines Mediums in einem Behälter mit einem in den Behälter hinein ragenden mechanisch schwingfähigen Gebilde, das mindestens eine von der Prozessgröße abhängige Schwingungseigenschaft aufweist, einem elektromechanischen Wandler, der das Gebilde mittels eines dem Wandler eingangsseitig zugeführten Anregungssignals zu mechanischen Schwingungen anregt, und der die resultierenden Schwingungen des Gebildes in ein die Schwingung wiedergebendes elektrisches Empfangssignal umwandelt und ausgangsseitig ausgibt, und einer Elektronik, die eine eingangsseitig an den Wandler angeschlossene Vorrichtung zur Erzeugung des Anregungssignals umfasst, und die anhand des Empfangssignals die die Prozessgröße bestimmt und/oder überwacht,

Derartige Vorrichtungen werden in einer Vielzahl von industriellen Anwendungen, insb. in der Mess- und Regeltechnik und der Prozessautomatisierung, zur Bestimmung und/oder zur Überwachung der genannten Prozessgrößen eingesetzt.

Bei den wohl bekanntesten Vorrichtungen dieser Art weist das mechanisch schwingungsfähige Gebilde zwei über eine Membran gekoppelte Schwinggabeln auf, die über einen auf der von den Schwingstäben abgewandten Rückseite der Membran angebrachten elektromechanischen Wandler in gegenläufige Schwingungen senkrecht zu deren Längsachse versetzt werden. Daneben sind auch Vorrichtungen bekannt, deren schwingfähiges Gebilde nur einen Schwingstab oder eine schwingfähige Membran aufweisen.

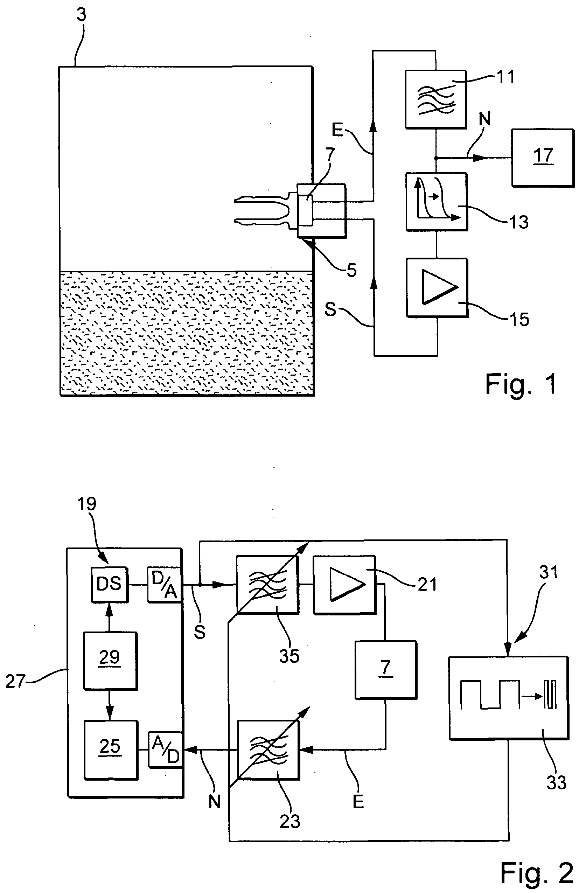

Fig. 1 zeigt ein klassisches Beispiel einer entsprechenden Vorrichtung, wie sie zur Überwachung eines vorbestimmten Füllstandes eines Mediums 1 in einem Behälter 3 eingesetzt wird. Das mechanische schwingfähige Gebilde 5 umfasst hier zwei über eine Membran gekoppelte Schwingstäbe, die auf der Höhe des zu überwachenden Füllstands seitlich in den Behälter 3 eingeführt sind. Das Gebilde 5 wird beispielsweise über einen auf der Rückseite der Membran angeordneten - hier nur schematisch dargestellten - elektromechanischen Wandler 7 in Schwingungen versetzt, indem ein die Schwingung wiedergebendes Empfangssignal E des Wandlers 7 über einen, einen Bandpass 11, einen Phasenschieber 13 und einen Verstärker 15 enthaltenden Rückkopplungspfad als Anregungssignal S auf den Wandler 7 zurückgeführt wird. Der Wandler 7 bildet in Verbindung mit dem schwingfähigen Gebilde 5 hierbei das frequenzbestimmende Element eines elektrischen Schwingkreises, der vorzugsweise in Resonanz betrieben wird. Hierzu wird über den Phasenschieber eine Phasenverschiebung zwischen Anregungssignal S und Empfangssignal E vorgegeben, bei der die Resonanzbedingung für den Schwingkreis möglichst gut erfüllt ist. Das Gebilde 5 wird hierdurch zu Schwingungen bei einer durch die Phasenverschiebung bestimmten Schwingfrequenz fᵣ angeregt, die im Bereich der Resonanzfrequenz des Gebildes 5 liegt.
Parallel dazu wird das Empfangssignal E als Nutzsignal N einer Mess- und Auswertungseinheit 17 zugeführt, die anhand des Nutzsignals N die von der Prozessgröße abhängige Schwingungseigenschaft bestimmt, und anhand dieser die Prozessgröße bestimmt und/oder überwacht. Zur Füllstandsüberwachung wird beispielsweise die sich bei der vorgegebenen Phasenverschiebung einstellende Schwingfrequenz fᵣ des Gebildes 5 gemessen und mit einer vorab bestimmten Grenzfrequenz verglichen. Ist die Schwingfrequenz fᵣ größer als die Grenzfrequenz, so schwingt das Gebilde 5 frei. Liegt die Schwingfrequenz fᵣ unterhalb der Grenzfrequenz, so ist das Gebilde 5 vom Medium 1 bedeckt, und die Vorrichtung meldet ein Überschreiten des vorbestimmten Füllstands.

Alternativ kann bei einem senkrechten Einsetzen eines stab- oder gabelförmigen schwingfähigen Gebildes in das Medium bei entsprechender Kalibrierung anhand der sich bei der vorgegebenen Phasenverschiebung einstellenden Schwingfrequenz der Bedeckungsgrad und damit der Füllstand über die Länge des Gebildes gemessen werden.

Zur Bestimmung und/oder Überwachung von Dichte oder Viskosität des Mediums wird das Gebilde bis zu einer vorgegebenen Eintauchtiefe senkrecht in das Medium eingeführt, und die bei vorgegebener Phasenverschiebung resultierende Schwingfrequenz, oder, bei einer Anregung mit einer festen Anregungsfrequenz, die Schwingungsamplitude oder die Phasenverschiebung der Schwingung gegenüber dem Anregungssignal gemessen.

Eine alternative Anregungsform stellt der, beispielsweise in der DE 100 50 299 A1 beschriebene, Frequenz-Sweep dar, bei dem die Frequenz des Anregungssignals periodisch einen vorgegebenen Frequenzbereich durchläuft. Auch hier wird die Prozessgröße beispielsweise anhand der Amplitude oder der Phasenverschiebung der resultierenden Schwingung bestimmt und/oder überwacht.

Unabhängig davon, ob die Vorrichtung kontinuierlich zu Schwingungen mit der sich bei einer vorgegebenen Phasenverschiebung einstellenden Schwingfrequenz fᵣ angeregt wird, im Frequenz-Sweep Verfahren betrieben wird oder mit einer fest vorgegebenen Anregungsfrequenz betrieben wird, ist eine Störsignalunterdrückung wünschenswert, die Störsignale, die z.B. durch Netzbrummen, Fremdvibrationen am Einsatzort der Vorrichtung, oder parasitäre Einkopplungen verursacht werden, eliminiert. Darüber hinaus kann das Empfangssignal, insb. bei einer Anregung durch rechteckförmige Anregungssignale, auf angeregte höhere Schwingungsmoden zurück zu führende Störsignale enthalten, die ebenfalls unterdrückt werden sollten.

Die Störsignalunterdrückung erfolgt heute beispielsweise über das in den Rückkopplungszweig eingesetzte Filter. Dabei stellt sich das Problem, dass das Filter einerseits für den gesamten Nutzfrequenzbereich des die Schwingung wiedergebenden Empfangssignals eine möglichst unverfälschte Signalübertragung gewährleisten sollte, und andererseits möglichst alle Störsignale unterdrücken sollte. Während für die unverfälschte Signalübertragung ein breitbandiges Filter erforderlich ist, wird für die Störsignalunterdrückung ein schmalbandiges Filter benötigt.

Da sich diese Forderungen gegenseitig ausschließen ist ein Kompromiss erforderlich, der beiden Forderungen so gut wie möglich gerecht wird. Damit sind sowohl Einbußen im Hinblick auf die unverfälschte Signalübertragung als auch im Hinblick auf die Störsignalunterdrückung verbunden.

Ein besonderes Problem bilden hierbei durch das Filter verursachte Phasenverschiebungen. Diese in der Regel stark von der Frequenz abhängigen Phasenverschiebungen führen bei der Anregung über einen Schwingkreis dazu, dass die Resonanzbedingung für den Schwingkreis, die einen festen Phasenbezug zwischen Anregungs- und Empfangsignal voraussetzt, nicht für alle sich in Abhängigkeit von der Prozessgröße einstellenden Schwingfrequenzen gleichermaßen erfüllt werden kann.

Darüber hinaus führen sie bei einer Filterung des Empfangssignals E zur Gewinnung eines störungsarmen Nutzsignals N zu Verschlechterungen der erzielbaren Genauigkeit und Zuverlässigkeit bei der Bestimmung und/oder Überwachung der Prozessgröße, da sich die Phasenlage des aus dem Empfangssignal abgeleiteten Nutzsignals durch die Filterung in frequenzabhängiger Weise verändert. Das Ausmaß der Messungenauigkeit ist abhängig von dem verwendetem Mess- und Auswertungsverfahren. Besonders betroffen sind Mess- und Auswertungsverfahren, die auf einer Messung der Phasenlage des Nutzsignals basieren, sowie Mess- und Auswertungsverfahren, die das Nutzsignal bei einer vorgegebenen Phasenverschiebung auswerten.

Es ist eine Aufgabe der Erfindung eine Vorrichtung zur Bestimmung und/oder Überwachung mindestens einer Prozessgröße der eingangs genannten Art anzugeben, die eine hochwertige Störsignalunterdrückung aufweist, die eine über den gesamten Nutzfrequenzbereich der Vorrichtung möglichst unverfälschte Signalübertragung gewährleistet.

Aus der EP1333256A2 ist ein Verfahren zur Feststellung und/oder Überwachung eines vorbestimmten Füllstandes mittels eines vibronischen Sensors mit einer Störsignalunterdrückung durch schmalbandiges Filtern der Ausgangsspannung mit einem nachführbaren Bandfilter bekannt geworden. Dieses Filter kann einerseits aus diskreten Bauteilen aufgebaut oder auch ein digitales Filter sein. Eine derartige Störsignalunterdrückung erfordert in den meisten Fällen jedoch eine vergleichsweise hohe Leistungsaufnahme des jeweiligen Messgeräts.

Die Aufgabe wird erfindungsgemäß deshalb dadurch gelöst, dass - die Elektronik ein ausgangsseitig an den Wandler angeschlossenes erstes Filter aufweist, dass aus dem Empfangssignal ein Nutzsignal herausfiltert, und anhand des Nutzsignals die Prozessgröße bestimmt und/oder überwacht,
- das erste Filter ein Bandpass-Filter in Form eines Switched-Capacitor Filters ist, welches mindestens einen mit einer Schaltfrequenz geschalteten Kondensator aufweist, und dessen Mittenfrequenz über die Schaltfrequenz einstellbar ist, und
- die Elektronik eine Vorrichtung umfasst, die die Mittenfrequenz im Betrieb durch eine Regelung der Schaltfrequenz (f_{SC}) des Kondensators in Abhängigkeit von der momentanen Frequenz (f_{S}) des Anregungssignals auf die Frequenz des Anregungssignals einstellt.

Nachführbare Bandpassfilter in Form eines Switched-Capacitor Filters zeichnen sich unter anderem durch eine im Vergleich zu anderen nachführbaren Filtern geringe Leistungsaufnahme aus. So ist beispielsweise aus der DE19634663A1 ein Coriolis-Durchflussmessgerät bekannt geworden, in dessen Elektronikeinheit ein nachführbarer Switched-Capacitor Filter integriert ist. In der US5533381 sind weiterhin eine Vorrichtung sowie ein Verfahren zur Volumenmessung, Dichte- und/oder Viskositätsbestimmung einer Flüssigkeit beschrieben, wobei ein Switched-Capacitor Filter zur Filterung eines Ausgangssignals eingesetzt wird.

Gemäß einer Weiterbildung weist die Elektronik ein zweites zwischen der Vorrichtung zur Erzeugung des Anregungssignals und dem Wandler angeordnetes Filter auf. Das zweite Filter ist ein Bandpassfilter mit einstellbarer Mittenfrequenz und die Vorrichtung stellt die Mittenfrequenz des zweiten Filters im Betrieb auf die Frequenz des Anregungssignals ein. Gemäß einer bevorzugten Ausgestaltung ist das zweite Filter ein Switched-Capacitor Filter, welches mindestens einen mit einer Schaltfrequenz geschalteten Kondensator aufweist, und dessen Mittenfrequenz über die Schaltfrequenz einstellbar ist.

Gemäß einer weiteren Ausgestaltung ist die Elektronikvorrichtung (31) zur Einstellung der Mittenfrequenz (f₀) der Filter (23,35) dazu ausgestaltet, die Schaltfrequenz, (f_{SC}) der Kondensatoren der Filter (23,35) auf ein Vielfaches der Frequenz des Anregungssignals einzustellen.

Gemäß einer weiteren Ausgestaltung der bevorzugten Ausgestaltung
- weist die Vorrichtung zur Einstellung der Mittenfrequenz der Filter einen Frequenzmultiplikator, insb. eine Phasenregelschleife, auf,
   - an dessen Eingang das Anregungssignal anliegt,
   - der ein Ausgangssignal erzeugt, dessen Frequenz ein Vielfaches der Frequenz des Anregungssignals ist, und
   - dessen Ausgangssignal als Steuersignal zur Einstellung der Schaltfrequenz der Filter an den Filtern anliegt.

Gemäß einer weiteren bevorzugten Ausgestaltung umfasst die Elektronik eine elektronische Einheit, insb. einen Mikrokontroller,
- in der die Vorrichtung zur Erzeugung des Anregungssignals integriert ist, und
- die das Nutzsignal empfängt und anhand des Nutzsignals die Prozessgröße bestimmt und/oder überwacht.

Gemäß einer bevorzugten Variante ist das Anregungssignal eine rechteckförmige Wechselspannung.

Gemäß einer weiteren bevorzugten Variante durchläuft die Frequenz des Anregungssignals periodisch einen vorgegebenen Frequenzbereich.

Die Erfindung und deren Vorteile werden nun anhand der Figuren der Zeichnung, in denen ein Ausführungsbeispiel dargestellt ist, näher erläutert; gleiche Teile sind in den Figuren mit gleichen Bezugszeichen versehen.
- Fig. 1 zeigt:: eine Vorrichtung zur Überwachung eines vorbestimmten Füllstands, bei der der Wandler ein frequenzbestimmendes Element eines elektrischen Schwingkreises bildet; und
- Fig. 2 zeigt:: einen Schaltplan einer erfindungsgemäßen Vorrichtung.

Fig. 2 zeigt einen Schaltplan einer erfindungsgemäßen Vorrichtung zur Bestimmung und/oder Überwachung mindestens einer Prozessgröße, insb. eines Füllstands, einer Dichte oder einer Viskosität, eines - in Fig. 2 nicht dargestellten - Mediums 1 in einem Behälter 3. Die Vorrichtung umfasst ein im Betrieb in den Behälter 3 hinein ragendes - hier ebenfalls nicht dargestelltes - mechanisch schwingfähiges Gebilde 5, das mindestens eine von der Prozessgröße abhängige Schwingungseigenschaft aufweist.

Das schwingungsfähige Gebilde 5 ist beispielsweise das in Fig. 1 dargestellte Gebilde 5 mit den beiden über die Membran gekoppelten Schwingstäben. Alternativ kann auch ein Gebilde mit nur einem Schwingstab oder einer schwingfähigen Membran eingesetzt werden.

Es ist ein elektromechanischer Wandler 7 vorgesehen, der das Gebilde 5 mittels eines dem Wandler 7 eingangsseitig zugeführten Anregungssignals S zu mechanischen Schwingungen anregt, und der die resultierenden Schwingungen des Gebildes 5 in ein die Schwingung wiedergebendes elektrisches Empfangssignal E umwandelt und ausgangsseitig ausgibt. Hierzu eignen sich insb. die aus dem Stand der Technik bekannten piezoelektrischen Wandler. Alternativ können aber auch elektromagnetische oder magnetostriktive Wandler eingesetzt werden.

Des Weiteren weist die Vorrichtung eine Elektronik auf, die eine eingangsseitig an den Wandler 7 angeschlossene Vorrichtung 19 zur Erzeugung des Anregungssignals S umfasst. In dem dargestellten Ausführungsbeispiel umfasst die Vorrichtung 19 einen digitalen Signalgenerator DS, der ein digitales Ausgangssignal liefert, das über einen Digital-Analog-Wandler D/A in ein analoges Wechselspannungssignal umgewandelt wird, dass dann als Anregungssignal S über einen Verstärker 21 eingangsseitig am Wandler 7 anliegt.

Darüber hinaus umfasst die Elektronik ein erstes ausgangsseitig an den Wandler 7 angeschlossenes Filter 23, dass aus dem Empfangssignal E ein Nutzsignal N herausfiltert, und einer Mess- und Auswertungseinheit 25 zuführt, die anhand des Nutzsignals N die von der Prozessgröße abhängige Schwingungseigenschaft bestimmt, und anhand dieser die Prozessgröße bestimmt und/oder überwacht.

Die Vorrichtung 19 zur Erzeugung des Anregungssignals S und die Mess- und Auswertungseinrichtung 25 sind vorzugsweise integrale Bestandteile einer intelligenten elektronischen Einheit 27, insb. eines Mikrocontrollers oder eines ASICs, die das Anregungssignals S über den integrierten Digital-Analog Wandler D/A ausgibt, und das Nutzsignal N über einen ebenfalls integrierten Analog/Digital Wandler A/D empfängt und in digitaler Form weiter verarbeitet. Mit der elektronischen Einheit 27 können, z.B. über eine integrierte Steuerung 29, unterschiedlichste Anregungs- und diesen entsprechende Mess- und Auswertungsverfahren umgesetzt werden.

Zum einen kann die Vorrichtung über ein Anregungssignal S mit einer fest vorgegebenen konstanten Anregungsfrequenz f_{S} betrieben werden. Hierdurch wird das Gebilde 5 zu erzwungenen Schwingungen dieser Frequenz angeregt. Entsprechend weist auch das Nutzsignal N die vorgegebene Frequenz des Anregungssignals S auf. Die Bestimmung der Prozessgröße kann anhand der Amplitude des Nutzsignals N und/oder dessen Phasenverschiebung gegeben über dem Anregungssignal S erfolgen. Die Nutzfrequenz f_{N} entspricht hier der Anregungsfrequenz f_{S}.

Zum anderen kann die Vorrichtung im Frequenz-Sweep Verfahren betrieben werden, indem die Einheit 27 ein Anregungssignal S generiert, dessen Frequenz f_{S} periodisch einen vorgegebenen Frequenzbereich Δf_{S} durchläuft. Auch hier führt das Gebilde 5 erzwungene Schwingungen aus, deren Frequenz der periodisch variierenden Frequenz f_{S} des Anregungssignals S folgt. Entsprechend folgt auch die Nutzfrequenz f_{N} des Nutzsignals N der periodisch variierenden Frequenz f_{S} des Anregungssignals S. Die Bestimmung der Prozessgröße kann anhand der Amplitude des Nutzsignals N und/oder dessen Phasenverschiebung gegeben über dem Anregungssignal S über den gesamten Nutzfrequenzbereich Δf_{N} erfolgen. Der Nutzfrequenzbereich Δf_{N} entspricht hier dem für das Anregungssignal S vorgegebenen Frequenzbereich Δf_{S}.

Eine weitere Betriebsform stellt die kontinuierliche Anregung von Schwingungen mit einer sich bei einer vorgegebenen Phasenverschiebung einstellenden Schwingfrequenz fᵣ dar. In diesem Fall wird der in Fig. 1 dargestellte analoge Rückkopplungszweig in der Einheit 29 in digitaler Form nachgebildet, indem ein Anregungssignal S generiert wird, dass die Frequenz f_{N} des eingehenden Nutzsignals N aufweist, und zur Erfüllung der Resonanzbedingung des elektrischen Schwingkreises gegenüber dem Nutzsignal N um eine vorgegebene Phasendifferenz verschoben ist. Das Gebilde 5 führt nach einer kurzen Einschwingzeit Schwingungen mit dessen Schwingfrequenz fᵣ aus. Dementsprechend ist sowohl die Frequenz f_{S} des Anregungssignals S, als auch die Nutzfrequenz f_{N} des Nutzsignals N gleich der Schwingfrequenz fᵣ. Der Nutzfrequenzbereich Δf_{N} entspricht hier dem Frequenzbereich, den die Schwingfrequenz fᵣ in Abhängigkeit von der Prozessgröße überstreicht. Die Bestimmung der Prozessgröße erfolgt hier beispielsweise anhand einer Messung der Schwingfrequenz fᵣ.

Erfindungsgemäß ist das erste Filter 23 ein Bandpassfilter mit einstellbarer Mittenfrequenz f₀ und die Elektronik umfasst eine Vorrichtung 31 zur Einstellung der Mittenfrequenz f₀ des Filters 23, die die Mittenfrequenz f₀ im Betrieb auf die Frequenz f_{S} des Anregungssignals S einstellt.

Das Filter 23 weist damit jederzeit ein optimal auf das Anregungssignal S abgestimmte Mittenfrequenz f₀ auf. Die aktuelle Frequenz f_{S} des Anregungssignals S ist, wie bereits zuvor anhand der unterschiedlichen Betriebsarten aufgezeigt wurde, unabhängig von der Betriebart der Vorrichtung auch gleich der aktuellen Nutzfrequenz f_{N} des Nutzsignals N. Das Filter 23 ist damit jederzeit optimal an das Nutzsignal N angepasst und gewährleistet dadurch eine weitgehend unverfälschte Signalübertragung des Nutzsignals N. Insb. bewirkt das Filter 23 aufgrund seiner für alle Nutzfrequenzen f_{N} gleichermaßen optimalen Anpassung der Mittenfrequenz f₀ keine frequenzabhängigen und damit variablen Phasenverschiebungen. Diese phasentreue und unverfälschte Signalübertragung des Nutzsignals N ist auch dann noch gewährleistet, wenn die im Betrieb auftretenden Nutzfrequenzen f_{N} einen extrem großen Nutzfrequenzbereich Δf_{N} überdecken.

Durch die permanente Anpassung der Mittenfrequenz f₀ an die momentane Frequenz f_{S} des Anregungssignals S und damit auch an die momentane Nutzfrequenz f_{N} ist es möglich ein äußerst schmalbandiges Filter, d.h. ein Filter 23 mit geringem Durchlassfrequenzbereich, einzusetzen. Das Filter 23 braucht nicht mehr für den gesamten Nutzfrequenzbereich Δf_{N} der Vorrichtung durchlässig zu sein. Entsprechend können Störsignale sehr effektiv eliminiert werden. Insb. können auch Störsignale unterdrückt werden, die innerhalb des Nutzfrequenzbereichs Δf_{N} der Vorrichtung liegen, sofern deren Frequenzen einen gewissen Mindestabstand zur aktuellen Nutzfrequenz f_{N} aufweisen.

Das Filter 23 ist ein Switched-Capacitor Filter, der mindestens einen mit einer Schaltfrequenz f_{sc} geschalteten Kondensator aufweist, und dessen Mittenfrequenz f₀ über die Schaltfrequenz f_{sc} einstellbar ist.

Die Vorrichtung 31, die die Mittenfrequenz f₀ des Filter 23 im Betrieb auf die Frequenz f_{S} des Anregungssignals S einstellt, generiert bzw. regelt in diesem Fall die Schaltfrequenz f_{sc} des Switched-Capacitor Filters in Abhängigkeit von der momentanen Frequenz f_{S} des Anregungssignals S. Als Schaltfrequenz f_{sc} wird vorzugsweise eine Frequenz eingesetzt, die ein vorgegebenes Vielfaches der Frequenz fₛ des Anregungssignals S ist. Die Vorrichtung 31 zur Einstellung der Mittenfrequenz f₀ umfasst hierzu beispielsweise einen Frequenzmultiplikator 33, insb. eine Phasenregelschleife (PLL), an dessen Eingang das Anregungssignal S anliegt. Der Frequenzmultiplikator 33 erzeugt ein Ausgangssignal, dessen Frequenz ein Vielfaches der Frequenz f_{S} des Anregungssignals S ist, und stellt ein entsprechendes Ausgangssignal als Steuersignal zur Einstellung der Schaltfrequenz f_{sc} des Filters zur Verfügung, das an einem entsprechenden Steuereingang des Filters 23 anliegt. Zur Erzielung einer hohen Filtercharakteristik und Güte wird vorzugsweise eine Schaltfrequenz f_{sc} eingestellt, die um ein großes Vielfaches, z.B. einen Faktor 100, größer ist als die einzustellende Mittenfrequenz f₀.

Frequenzmultiplikatoren 33 werden bevorzugt in erfindungsgemäßen Vorrichtungen eingesetzt, deren mechanisch schwingfähige Gebilde 5, Schwingungen mit verhältnismäßig hohen Frequenzen ausführen. Ein Beispiel hierfür sind die eingangs genannten Membranschwinger, deren Membran typischer Weise Schwingungen mit Frequenzen im Bereich von 15 kHz bis 30 kHz ausführen.

In Verbindung mit schwingfähigen Gebilden 5, die Schwingungen mit niedrigeren Frequenzen ausführen, kann die Vorrichtung 31 zur Einstellung der Mittenfrequenz f₀ alternativ auch als integraler Bestandteil der elektronischen Einheit 27 ausgebildet sein. Beispiele hierfür sind die eingangs genannten schwingfähigen Gebilde 5, die einen oder zwei Schwingstäbe aufweisen, und typischer Weise in Schwingungen mit Frequenzen im Bereich von 300 Hz bis 1200 Hz ausführen. In diesem Fall kann das Steuersignal in der elektronischen Einheit 27 generiert, und aus diesem Steuersignal durch Herunterteilung das Anregungssignal S abgeleitet werden. Aufgrund der niedrigen Frequenzen ist die elektronische Einheit 27 hier in der Lage die zur Erzielung einer hohen Filtercharakteristik und Güte gewünschten hohen Schaltfrequenzen f_{sc} vorzugeben, ohne dass hierzu extrem hohe Taktraten der Einheit 27 nötig wären, die zu einem hohen Energieverbrauch der Einheit 27 führen würden.

Vorzugsweise umfasst die Elektronik zusätzlich ein zweites zwischen der Vorrichtung 19 zur Erzeugung des Anregungssignals S und dem Wandler 7 angeordnetes Filter 35, das, insb. bei einer Anregung mit rechteckförmigen Anregungssignalen S, zur Aufbereitung des Anregungssignals S dient. Das Filter 35 filtert aus dem unter Umständen höherfrequentere Anteile enthaltenden Anregungssignal S ein annähernd monochromatisches Signal heraus, das dann dem Wandler 7 zur Anregung der Schwingung des schwingfähigen Gebildes 5 zugeführt wird. Hierdurch wird die Anregung von höheren Schwingungsmoden, wie sie insb. bei der Verwendung von ungefilterten rechteckförmigen Anregungssignalen S auftritt, vermieden.

Rechteckförmige Anregungssignale S bieten den Vorteil, dass sie von der elektronischen Einheit 29 unter Aufwendung von deutlich weniger Rechenleistung erzeugt werden können, als das beispielsweise bei der digitalen Generierung von sinusförmigen Anregungssignalen der Fall ist. Über das zweite Filter 35 ist es möglich, rechteckförmige Anregungssignale S einzusetzen, ohne dass dadurch eine Verschlechterung der Signalqualität im Bezug auf die Schwingungsanregung über den Wandler 7 entsteht.

Auch das zweite Filter 35 ist ein Bandpassfilter mit einstellbarer Mittenfrequenz f₀. Die Mittenfrequenz f₀ dieses zweiten Filters 35 wird, genau wie die Mittenfrequenz f₀ des ersten Filters 23, mittels der Vorrichtung 31 zur Einstellung der Mittenfrequenz f₀ im Betrieb auf die Frequenz f_{S} des Anregungssignals S eingestellt.

Der zweite Filter 35 ist vorzugsweise identisch zu dem ersten Filter 23, und wird parallel zum ersten Filter 23 über die Vorrichtung 31 gesteuert. Insb. wird auch hier vorzugsweise ein Switched-Capacitor Bandpassfilter eingesetzt, dessen Mittenfrequenz f₀ über die Schaltfrequenz f_{sc}, mit der dessen Kondensatoren geschaltet werden, eingestellt wird, wobei die Schaltfrequenz f_{sc} auch hier wieder ein Vielfaches der Frequenz des Anregungssignals S ist.

### Bezugszeichenliste

- 1: Medium
- 3: Behälter
- 5: mechanisch schwingfähiges Gebilde
- 7: elektromechanischer Wandler
- 11: Bandpass
- 13: Phasenschieber
- 15: Verstärker
- 17: Mess- und Auswertungseinheit
- 19: Vorrichtung zur Erzeugung des Anregungssignals
- 21: Verstärker
- 23: erstes Filter
- 25: Mess- und Auswertungseinheit
- 27: elektronische Einheit
- 29: Steuerung
- 31: Vorrichtung zur Einstellung der Mittenfrequenz der Filter
- 33: Frequenzmultiplikator
- 35: zweite Filter

## Patentansprüche

1. Vorrichtung zur Bestimmung und/oder Überwachung mindestens einer Prozessgröße, insb. eines Füllstands, einer Dichte oder einer Viskosität, eines Mediums (1) in einem Behälter (3), mit
- einem im Betrieb in den Behälter (3) hinein ragenden mechanisch schwingfähigen Gebilde (5), das mindestens eine von der Prozessgröße abhängige Schwingungseigenschaft aufweist,
- einem elektromechanischen Wandler (7),
-- der das Gebilde (5) mittels eines dem Wandler (7) eingangsseitig zugeführten Anregungssignals (S) zu mechanischen Schwingungen anregt, und
-- der die resultierenden Schwingungen des Gebildes (5) in ein die Schwingung wiedergebendes elektrisches Empfangssignal (E) umwandelt und ausgangsseitig ausgibt, und
- einer Elektronik,
-- die eine eingangsseitig an den Wandler (7) angeschlossene Vorrichtung zur Erzeugung des Anregungssignals (19) umfasst,
-- die ein ausgangsseitig an den Wandler (7) angeschlossenes erstes Filter (23) aufweist, dass aus dem Empfangssignal (E) ein Nutzsignal (N) herausfiltert, und
-- die anhand des Nutzsignals (N) die Prozessgröße bestimmt und/oder überwacht,
**dadurch gekennzeichnet, dass**
- das erste Filter (23) ein Bandpass-Filter in Form eines Switched-Capacitor Filters ist, welches mindestens einen mit einer Schaltfrequenz (f_{sc}) geschalteten Kondensator aufweist, und dessen Mittenfrequenz (f₀) über die Schaltfrequenz (f_{sc}) einstellbar ist,
und
- die Elektronik eine Vorrichtung (31) umfasst, die die Mittenfrequenz (f₀) im Betrieb durch eine Regelung der Schaltfrequenz (f_{SC}) des Kondensators in Abhängigkeit von der momentanen Frequenz (f_{S}) des Anregungssignals auf die Frequenz (f_{S}) des Anregungssignals (S) einstellt.

2. Vorrichtung nach Anspruch 1, **dadurch gekennzeichnet, dass**
- die Elektronik ein zweites zwischen der Vorrichtung (19) zur Erzeugung des Anregungssignals (S) und dem Wandler angeordnetes Filter (35) aufweist,
- das zweite Filter (35) ein Bandpassfilter mit einstellbarer Mittenfrequenz (f₀) ist, und
- die Vorrichtung (31) die Mittenfrequenz (f₀) des zweiten Filters (35) im Betrieb auf die Frequenz (f_{S}) des Anregungssignals (S) einstellt.

3. Vorrichtung nach Anspruch 1 oder 2, **dadurch gekennzeichnet, dass**
das zweite Filter (23, 35) ein Switched-Capacitor Filter ist, dass mindestens einen mit einer Schaltfrequenz (f_{sc}) geschalteten Kondensator aufweist, und dessen Mittenfrequenz (f₀) über die Schaltfrequenz (f_{sc}) einstellbar ist.

4. Vorrichtung nach Anspruch 3, **dadurch gekennzeichnet, dass**
die Elektronikvorrichtung (31) zur Einstellung der Mittenfrequenz (f₀) der Filter (23,35) dazu ausgestaltet ist, die Schaltfrequenz (f_{SC}) der Kondensatoren der Filter (23,35) auf ein Vielfaches der Frequenz (f_{S}) des Anregungssignals (S) einzustellen.

5. Vorrichtung nach Anspruch 3 und 4, **dadurch gekennzeichnet, dass**
- die Vorrichtung (31) zur Einstellung der Mittenfrequenz (f₀) der Filter (23, 35) einen Frequenzmultiplikator (33), insb. eine Phasenregelschleife (PLL), aufweist,
-- an dessen Eingang das Anregungssignal (S) anliegt,
-- der ein Ausgangssignal erzeugt, dessen Frequenz ein Vielfaches der Frequenz (f_{S}) des Anregungssignals (S) ist, und
-- dessen Ausgangssignal als Steuersignal zur Einstellung der Schaltfrequenz (f_{sc}) der Filter (23, 35) an den Filtern (23, 35) anliegt.

6. Vorrichtung nach Anspruch 1, **dadurch gekennzeichnet, dass**
die Elektronik eine elektronische Einheit (27), insb. einen Mikrokontroller, umfasst,
- in dem die Vorrichtung (19) zur Erzeugung des Anregungssignals (S) integriert ist, und
- die das Nutzsignal (N) empfängt und anhand des Nutzsignals (N) die Prozessgröße bestimmt und/oder überwacht.

7. Vorrichtung nach Anspruch 6, **dadurch gekennzeichnet, dass** die Elektronikeinheit (27) dazu ausgestaltet ist, als Anregungssignal (S) eine rechteckförmige Wechselspannung zu erzeugen.

8. Vorrichtung nach Anspruch 6, **dadurch gekennzeichnet, dass** die Elektronikeinheit (27) dazu ausgestaltet ist,
die Frequenz (S_{S}) des Anregungssignal (S) so einzustellen, dass es periodisch einen vorgegebenen Frequenzbereich (Δf_{S}) durchläuft.

## Claims

1. Apparatus for determining and/or monitoring at least one process variable of a medium, particularly a level, a density or a viscosity of a medium (1) in a vessel (3), with
- a structure (5) capable of mechanical vibration during operation which projects into the vessel (3) and has at least one vibration property that depends on the process variable,
- an electromechanical transducer (7),
- which excites the structure (5) to perform mechanical vibrations using an excitation signal (S) supplied to the transducer (7) at the input side, and
- which converts the resulting vibrations of the structure (5) to an electrical reception signal (E) that reflects the vibration, and outputs it at the output side, and
- electronics,
-- which comprise an apparatus connected to the transducer (7) at the input side and designed to generate the excitation signal (19),
-- which has a first filter (23) connected to the transducer (7) at the output side, said filter filtering a useful signal (N) out of the reception signal (E), and
-- which determines and/or monitors the process variable using the useful signal (N),
**characterized in that**
- the first filter (23) is a bypass filter in the form of a switched capacitor filter, which has at least one capacitor that is switched at a switching frequency (f_{sc}), and whose center frequency (f₀) can be adjusted via the switching frequency (f_{sc}),
and
- the electronics comprise an apparatus (31), which, during operation, adjusts the center frequency (f₀) to the frequency (f_{S}) of the excitation signal (S) by regulating the switching frequency (f_{SC}) of the capacitor depending on the current frequency (f_{S}) of the excitation signal.

2. Apparatus as claimed in Claim 1, **characterized in that**
- the electronics have a second filter (35) arranged between the apparatus (19) for generating the excitation signal (S) and the transducer,
- the second filter (35) is a bandpass filter with an adjustable center frequency (f₀), and
- the apparatus (31) sets the center frequency (f₀) of the second filter (35) to the frequency (fₛ) of the excitation signal (S) during operation.

3. Apparatus as claimed in Claim 1 or 2, **characterized in that**
the second filter (23, 35) is a switched capacitor filter which has at least one capacitor switched at a switching frequency (f_{sc}) and whose center frequency (f₀) can be adjusted via the switching frequency (f_{sc}).

4. Apparatus as claimed in Claim 3, **characterized in that**
the electronic apparatus (31) for setting the center frequency (f₀) of the filters (23, 35) is designed to set the switching frequency (f_{sc}) of the capacitors of the filters (23, 35) to a multiple of the frequency (fₛ) of the excitation signal (S).

5. Apparatus as claimed in Claim 3 and 4, **characterized in that**
- the apparatus (31) for setting the center frequency (f₀) of the filters (23, 35) has a frequency multiplier (33), particularly a phased locked loop (PLL),
-- at the input of which the excitation signal (S) is applied,
-- which generates an output signal whose frequency is a multiple of the frequency (f_{S}) of the excitation signal (S), and
- whose output signal is applied at the filters (23, 35) as a control signal for setting the switching frequency (f_{sc}) of the filters (23, 35).

6. Apparatus as claimed in Claim 1, **characterized in that**
the electronics comprise an electronic unit (27), particularly a microcontroller,
- in which the apparatus (19) for generating the excitation signal (S) is integrated, and
- which receives the useful signal (N) and determines and/or monitors the process variable on the basis of the useful signal (N).

7. Apparatus as claimed in Claim 6, **characterized in that**
the electronics unit (27) is designed to generate a rectangular alternating voltage as the excitation signal (S).

8. Apparatus as claimed in Claim 6, **characterized in that**
the electronics unit (27) is designed to set the frequency (f_{S}) of the excitation signal (S) in such a way that it runs through a pre-defined frequency range (Δf_{S}) periodically.

## Revendications

1. Dispositif destiné à la détermination et/ou la surveillance d'au moins une grandeur process, notamment un niveau, une densité ou une viscosité, d'un produit (1) dans un réservoir (3), avec
- un dispositif mécaniquement apte à vibrer (5) en fonctionnement, s'étendant à l'intérieur du réservoir (3), qui présente au moins une propriété vibratoire dépendant de la grandeur process,
- un transducteur électromécanique (7),
-- qui excite en vibrations mécaniques le dispositif (5) au moyen d'un signal d'excitation (S) acheminé côté entrée au transducteur (7), et
-- qui convertit les vibrations résultant du dispositif (5) en un signal de réception électrique (E) reflétant les vibrations et les émet côté sortie, et
- une électronique,
- qui comprend un dispositif raccordé côté entrée au transducteur (7), destiné à la génération du signal d'excitation (19),
- qui comporte un premier filtre (23) raccordé côté sortie au transducteur (7), lequel filtre extrait par filtrage un signal utile (N) à partir du signal de réception (E), et
-- qui détermine et/ou surveille la grandeur process au moyen du signal utile (N), **caractérisé en ce que**
- le premier filtre (23) comporte un filtre passe-bande sous la forme d'un filtre à capacités commutées, lequel comprend au moins un condensateur commuté à une fréquence de commutation (f_{sc}), et dont la fréquence centrale (f₀) est réglable via la fréquence de commutation (f_{sc}),
et
- l'électronique comprend un dispositif (31), qui règle, en fonctionnement, la fréquence centrale (f₀) à la fréquence (f_{S}) du signal d'excitation (S) au moyen d'une régulation de la fréquence de commutation (f_{SC}) du condensateur en fonction de la fréquence momentanée (f_{S}).

2. Dispositif selon la revendication 1, **caractérisé en ce que**
- l'électronique comporte un deuxième filtre (35) disposé entre le dispositif (19) destiné à la génération du signal d'excitation (S) et le transducteur,
- le deuxième filtre (35) est un filtre passe-bande avec fréquence centrale (f₀) réglable, et
- le dispositif (31) règle, en fonctionnement, la fréquence centrale (f₀) du deuxième filtre (35) à la fréquence (f_{S}) du signal d'excitation (S).

3. Dispositif selon la revendication 1 ou 2, **caractérisé en ce que** le deuxième filtre (23, 35) est un filtre à capacités commutées, qui comporte au moins un condensateur commuté à une fréquence de commutation (f_{sc}), et dont la fréquence centrale (f₀) est réglable via la fréquence de commutation (f_{sc}).

4. Dispositif selon la revendication 3, **caractérisé en ce que** le dispositif électronique (31) est conçu pour le réglage de la fréquence centrale (f₀) des filtres (23, 35) de telle sorte à régler la fréquence de commutation (f_{SC}) des condensateurs des filtres (23, 35) à un multiple de la fréquence (f_{S}) du signal d'excitation (S).

5. Dispositif selon la revendication 3 et 4, **caractérisé en ce que**
- le dispositif (31) destiné au réglage de la fréquence centrale (f₀) des filtres (23, 35) comporte un multiplicateur de fréquence (33), notamment une boucle à verrouillage de phase (PLL),
- à l'entrée de laquelle est appliqué le signal d'excitation (S),
- qui génère un signal de sortie, dont la fréquence est un multiple de la fréquence (f_{S}) du signal d'excitation (S), et
-- dont le signal de sortie est appliqué aux filtres (23, 35) en tant que signal de commande pour le réglage de la fréquence de commutation (f_{SC}) des filtres (23, 35).

6. Dispositif selon la revendication 1, **caractérisé en ce que** l'électronique comprend une unité électronique (27), notamment un microcontrôleur,
- dans laquelle est intégré le dispositif (19) destiné à la génération du signal d'excitation (S), et
- qui reçoit le signal utile (N) et détermine et/ou surveille la grandeur process au moyen du signal utile (N)

7. Dispositif selon la revendication 6, **caractérisé en ce que** l'unité électronique (27) est conçue afin de générer une tension alternative rectangulaire en tant que signal d'excitation (S).

8. Dispositif selon la revendication 6, **caractérisé en ce que** l'unité électronique (27) est conçue afin de régler la fréquence (f_{S}) du signal d'excitation (S) de telle sorte à ce qu'il parcourt périodiquement une plage de fréquences (Δf_{S}) prédéfinie.
